# EUROPEAN PATENT APPLICATION

(11) **EP 4 550 538 A1**
(43) Date of publication of application: **07.05.2025**
(21) Application number: 24203802.4
(22) Date of filing: 01.10.2024
(51) Int. Cl.: H01M 50/204, H01M 50/342

(54) **BATTERY PACK MODULE**

(30) Priority: 30.10.2023 GB 202316534
(71) Applicant: Rolls-Royce plc, London N1 9FX (GB)
(72) Inventor: Dobson, Matthew, Derby, DE24 8BJ (GB)
(74) Representative: Rolls-Royce plc

(57) **Abstract**

The disclosure relates to a battery pack module, for example for use in an electric or hybrid aircraft. Example embodiments include a battery pack module (500) comprising: a plurality of battery cells (501₁₋ₙ) arranged in a battery cell array (502); a battery management system (503) electrically connected to the battery cell array (502); an enclosure (504) surrounding the battery cell array (502); a vent (505) connected to the enclosure (504) and arranged to provide a fluid flow path between an interior of the enclosure (504) and an external environment; a disc arranged to provide a fluid seal between the interior of the enclosure (504) and the vent (505), the disc configured to rupture upon a pressure differential between the interior of the enclosure (504) and the external environment exceeding a predetermined threshold; and a sensing circuit connected between the disc and the battery management system (503) and configured to provide a signal to the battery management system (503) upon rupture of the disc.

## Description

### TECHNICAL FIELD

The disclosure relates to a battery pack module, for example for use in an electric or hybrid aircraft.

### BACKGROUND

Interest in aircraft with electric and hybrid electric propulsion systems is increasing because of the need to reduce carbon emissions and pollution, and because of developments in the facilitating electrical technologies. Hybrid electric propulsion systems include both internal combustion engines, for example gas turbines or diesel engines, and energy storage, typically in the form of batteries. Purely electric propulsion systems completely dispense with internal combustion engines and use only batteries or, in some instances, fuel cells, as an energy source for their propulsors.

The terms Advanced Air Mobility (AAM) and Urban Air Mobility (UAM) refer to the use of aircraft - typically electric and hybrid electric aircraft - to transport passengers relatively short distances, for example tens or perhaps hundreds of kilometres. Most proposed AAM platforms have Vertical Take-Off and Landing (VTOL) or Short Take-Off and Landing (STOL) capabilities so that the aircraft can take-off and land at locations convenient for passengers, for example at so-called 'vertiports' close to or in urban environments. It is expected that the number of passengers carried by an AAM platform will be relatively small - likely fewer than twenty and typically of the order of five to ten.

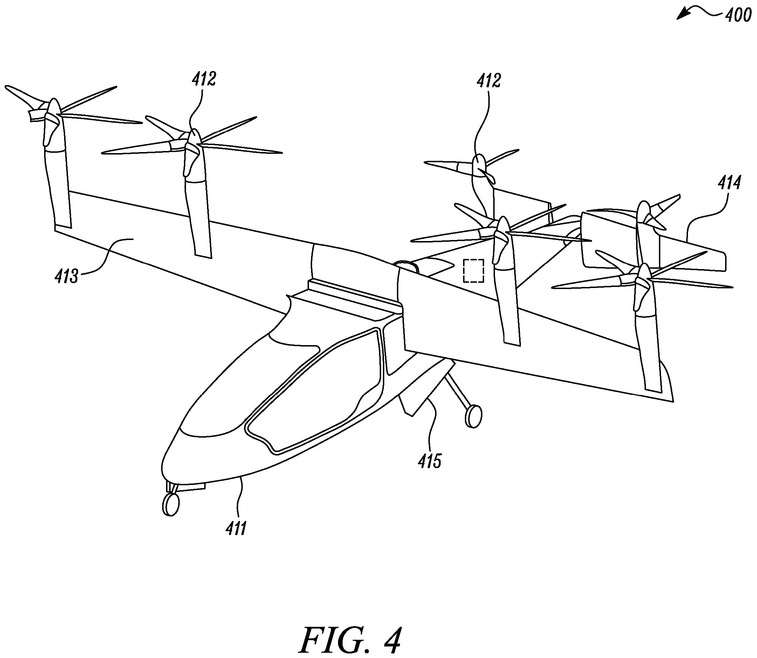

Various configurations have been proposed for AAM platforms, and one example is illustrated in Figure 4. The aircraft 400 includes a fuselage 411 and a distributed propulsion system which includes a number of propulsors 412 (in this case six propulsors) in the form of open rotors driven by rotary electric machines. The propulsors 412, which in this case are attached to wings 413 or other flight surfaces 414, are tiltable between a VTOL configuration and a horizontal flight configuration to facilitate both modes of flight. Other proposed configurations are helicopter-like configurations, for example multi-copters (e.g., quadcopters with ducted fans) and the like.

Battery packs for electric or hybrid vehicles, including aircraft, require a battery management system, which is responsible for monitoring the key parameters of the battery pack that are relevant to safety and performance. One such key parameter is temperature, another key parameter is pressure. Typical battery packs may contain hundreds of battery cells, with a vehicle typically requiring multiple such packs depending on power requirements. Since a single battery cell failure may lead to failure of an entire battery pack, it is important that close monitoring is achieved, which may be on a battery pack level or on an individual cell level.

In the event of a lithium-ion battery thermal runaway, the battery cell releases hot gases, which can affect neighbouring cells and result in cascading failure of a module or of a battery pack. Containment and/or controlled release of hot gases is therefore important to ensure safety of a battery system. Under certain conditions involving high rates of reaction, a battery thermal runaway can result in explosion, where combustible elements provide a sudden release of energy.

Gas venting before, during and after thermal runaway causes the internal pressure of a battery pack enclosure to increase. This can be rapid or gradual, depending on a number of factors including temperature, the number of failing cells, the stage of thermal runaway, the particular chemistry of the cells, ignition of gases, and any generation of hydrogen (or other flammable gases) from side reactions, which may cause an explosive internal atmosphere.

Containment devices for conventional high voltage (HV) battery packs tend to be designed around the principle of having a strong, rigid battery enclosure that can act as a pressure vessel capable of withstanding high temperatures and, if required, a controlled release of pressure to prevent an explosion.

An aim of battery enclosure containment is to reduce the impact of thermal runaway by providing for containment and controlled release of hot gases, which reduces temperature and pressure levels inside the enclosure. This helps to reduce the possibility of explosion or rupture of the enclosure, which can lead to other battery packs becoming affected. Lowering temperatures inside a HV battery pack can also reduce the rate of propagation to other cells within the pack or may avoid other cells becoming affected.

Some current thermal runaway protection devices for HV battery packs may incorporate pressure rupture discs or pressure release valves, which can be activated when a differential in pressure between the interior of a battery enclosure and an external environment exceeds a threshold. One or more such devices may be incorporated in each battery enclosure depending on the battery vent management concept used.

A problem with current enclosures with thermal runaway protection, particularly when used in aircraft applications, is in ensuring any protection device is only activated when required. The pressure variations inherent in aircraft use may cause a pressure release valve or rupture disc to open during normal use, resulting in a reduction in protection and a requirement for regular maintenance. Once such devices are active, the internal environment of a battery pack is exposed to the external environment, which can cause adverse effects such as short circuits due to ingress of water and other contaminants.

### SUMMARY

According to a first aspect there is provided a battery pack module comprising:
a plurality of battery cells arranged in a battery cell array;
a battery management system electrically connected to the battery cell array;
an enclosure surrounding the battery cell array;
a vent connected to the enclosure and arranged to provide a fluid flow path between an interior of the enclosure and an external environment;
a disc arranged to provide a fluid seal between the interior of the enclosure and the vent, the disc configured to rupture upon a pressure differential between the interior of the enclosure and the external environment exceeding a predetermined threshold; and
a sensing circuit connected between the disc and the battery management system and configured to provide a signal to the battery management system upon rupture of the disc.

The battery pack module according to the first aspect is arranged such that the battery management system, which may be connected to multiple such battery enclosures, is able to detect the status and integrity of the battery enclosure, indicating when the enclosure is exposed to the external environment by rupture of the disc. This helps prevent operation of the battery pack module with a reduced system performance and provides a reduction in risk associated with undesirable effects of ingress into the battery pack module during operation, storage, or transportation, such as water, dust, debris, which may lead to internal short circuit, partial discharge, corrosion, or reduced battery performance. The combination of a rupture disc with the battery management system to enable monitoring thereby provides for easier maintenance and service.

The battery pack module may further comprise a bleed valve in the enclosure, the bleed valve configured to allow for equalisation of pressure between the interior of the enclosure and the external environment. The bleed valve provides a restricted flow between the interior and exterior of the enclosure so that gradual changes, for example due to changes in atmospheric pressure and temperature, do not cause the disc to burst during normal operation.

The vent may comprise a pipe, or duct, having a first end connected to the enclosure and a second end open to the external environment. The disc may be secured against the first end of the pipe.

The sensing circuit may comprise a conductor extending across a face of the disc and arranged to break an electrical connection to the battery management system on rupture of the disc. The sensing circuit may alternatively comprise a sensor configured to detect rupture of the disc.

The predetermined threshold may be between around 0.1 and 1.0 bar, for example between around 0.3 and 0.5 bar.

The battery cell array may be configured to store between around 20 kWh and 100 kWh.

The disc may be metallic or, in some case, may be a composite material.

The battery management system may be configured to output a first alert upon detection of rupture of the disc. The battery pack module may further comprise a temperature sensor configured to sense a temperature of the interior of the enclosure. The battery management system may be further configured to receive a temperature signal from the temperature sensor and provide a second alert upon detection of rupture of the disc in combination with detection of a temperature of the interior of the enclosure above a temperature threshold. The battery management system may be further configured to disconnect the battery cell array upon detection of rupture of the disc in combination with detection of detection of a temperature of the interior of the enclosure exceeding a temperature threshold.

According to a second aspect there is provided a vehicle propulsion system comprising a battery pack module according to the first aspect.

According to a third aspect there is provided an aircraft comprising the vehicle propulsion system according to the second aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** is a schematic illustration of a hybrid electric aircraft propulsion system;
**Figure 2** is a schematic illustration of a purely electric aircraft propulsion system;
**Figure 3** is a perspective view of an example electric aircraft;
**Figure 4** is a perspective view of an electric aircraft in a VTOL configuration;
**Figure 5** is a schematic diagram of an example battery pack module;
**Figure 6** is schematic diagram of an example rupture disc connected to a sensing circuit;
**Figure 7** is a schematic diagram of an example vent with a rupture disc connected to a sensing circuit;
**Figure 8** is a schematic diagram of an example vent with a rupture disc;
**Figure 9** is a schematic diagram of an example vent with a rupture disc and a separate rupture sensor; and
**Figure 10** is a schematic diagram of an example battery pack system comprising multiple enclosures enclosing multiple battery cell arrays.

### DETAILED DESCRIPTION

### Figure 1

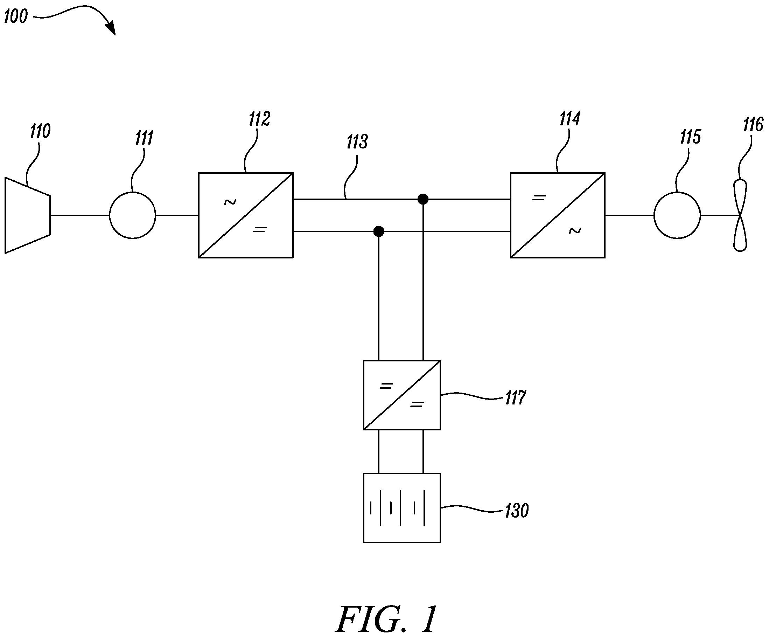

Referring to Figure 1, the propulsion system of a hybrid electric aircraft is generally indicated at 100 and incorporates both an engine 110, such as a gas turbine engine, and a battery pack 130. Both the engine 110 and the battery pack 130 are used as energy sources to power a motor-driven propeller 116, as well as ancillary electrical systems (not shown). The propulsion system 100 of the hybrid electric aircraft will typically further comprise a generator 111, an AC/DC converter 112, a high voltage DC (HVDC) distribution bus 113, a DC/AC converter 114, an electric motor 115 that drives the propeller 116, and a DC/DC converter 117.

A shaft of the engine 110 is coupled to and drives the rotation of a shaft of the generator 111 which thereby produces alternating current. The AC/DC converter 112, which faces the generator 111, converts the alternating current into direct current which is fed to various electrical systems via the HVDC distribution bus 113. These electrical systems include the motor 115 that drives the propeller 116. The motor 115 will typically be a synchronous motor that interfaces with the HVDC distribution bus 113 via the DC/AC converter 114.

The battery pack 130, which may be made up of a number of lithium-ion battery modules connected in series and/or parallel, is connected to the HVDC distribution bus 113 via the DC/DC converter 117. The DC/DC converter 117 converts between a voltage of the battery pack 130 and a voltage of the HVDC distribution bus 113. In this way, the battery pack 130 can replace or supplement the power provided by the engine 110 (by discharging and thereby feeding the HVDC distribution bus 113) or can be charged using the power provided by the engine 110 (by being fed by the HVDC distribution bus 113).

### Figure 2

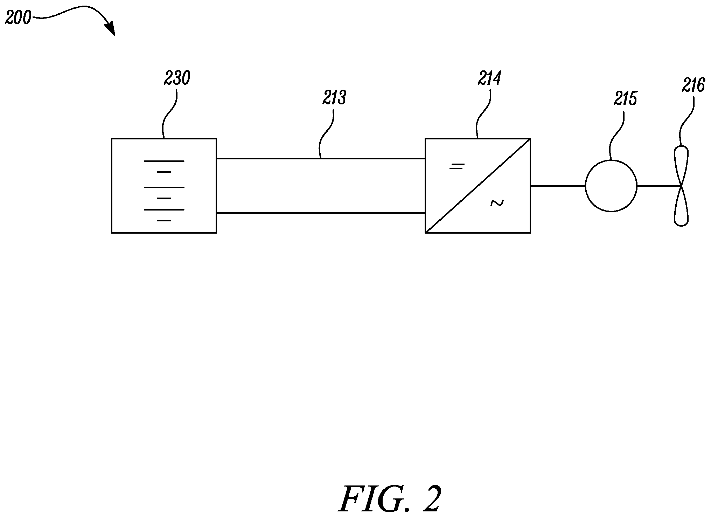

A battery pack will also appear in the propulsion system of a purely electric aircraft, generally indicated as 200 in Figure 2. The battery pack 230 feeds a HVDC distribution bus 213, optionally via DC/DC converter (not shown), which delivers power to one or more synchronous motors 215 via a DC/AC converter 214. The one or more motors 215 drive the one or more propellers 216 that propel the aircraft.

### Figure 3

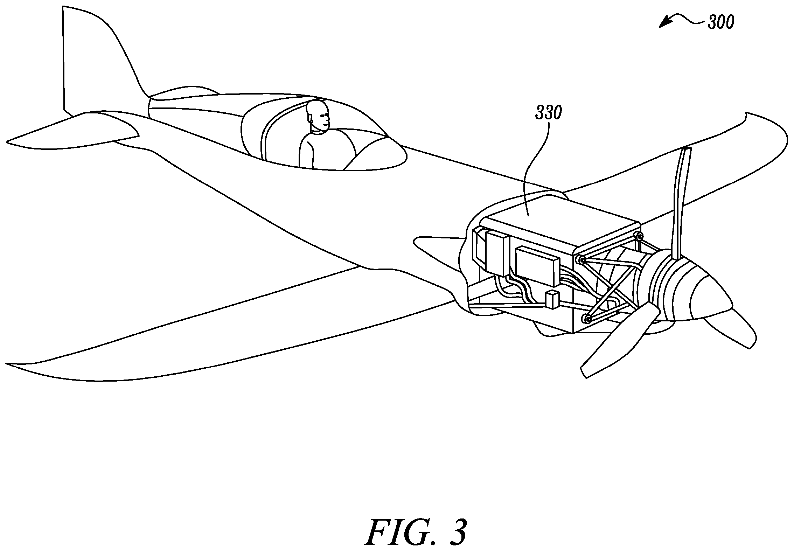

Figure 3 shows a purely electric aircraft 300. A battery pack 330 is indicated.

### Figure 4

Figure 4 illustrates an electric aircraft 400 which may be used for AAM applications. The aircraft includes a fuselage 411, which incorporates a cabin for occupants, and a distributed propulsion system which in this case has six open rotor propulsors 412 driven by rotary electric machines. Also visible in Figure 1 is a retractable undercarriage 415 in which a landing platform, in this case having wheels, can be stowed during flight.

The size of the fuselage 411 and the cabin will depend on the application requirements. In this example the cabin and fuselage are sized for five occupants, including a pilot. It is however envisaged that some AAM platforms will not require a pilot and will instead be flown under the control of an autopilot system.

Four of the propulsors 412 are attached to the wings 413 of the aircraft 400, and the remaining two propulsors 412 are attached to a separate flight control surface 414 located towards the rear of the aircraft 400. In this embodiment the wings 413 and the rear control surface 414 are tiltable between a VTOL configuration in which the axes of the rotors point upward and a horizontal flight configuration in which the axes of the rotors point forward. The horizontal flight configuration, whilst principally used for horizontal flight, may also be used for taxiing and possibly STOL operation if supported.

The electrical systems, including the electric machines that power the aircraft 400, receive electrical power from one or more battery packs (not shown) located within the aircraft 400. The battery packs may be located in any suitable part or parts of the aircraft, including the fuselage 411, the wings 413 and the propulsors 412.

Whilst the illustrated aircraft 400 is an electric VTOL (eVTOL) aircraft, it will be appreciated that AAM platforms could also be of the STOL type and could also be hybrid electric aircraft that include both engines and batteries. Hybrid electric platforms may utilize similar distributed propulsion system configurations, but the underlying power system may be a series hybrid, parallel hybrid, turboelectric or other type of hybrid power system.

### Figure 5

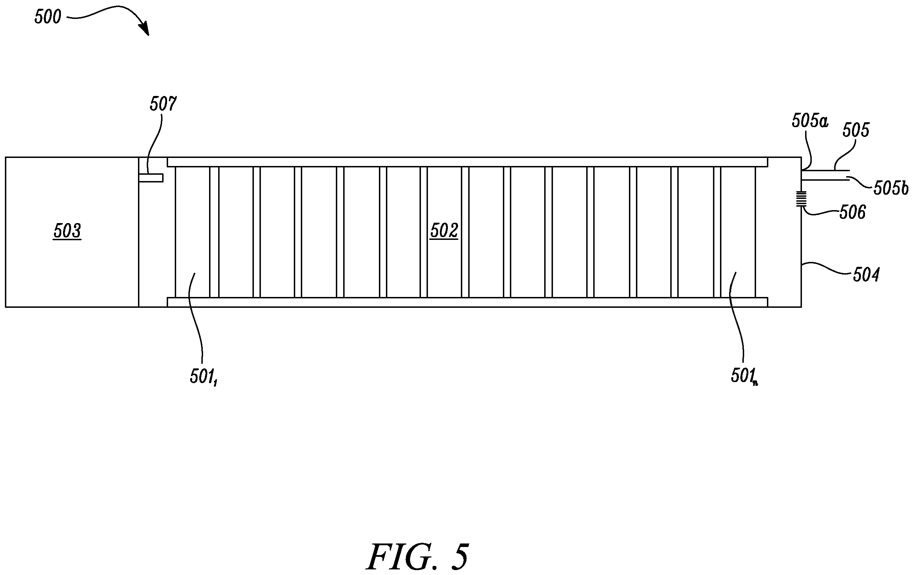

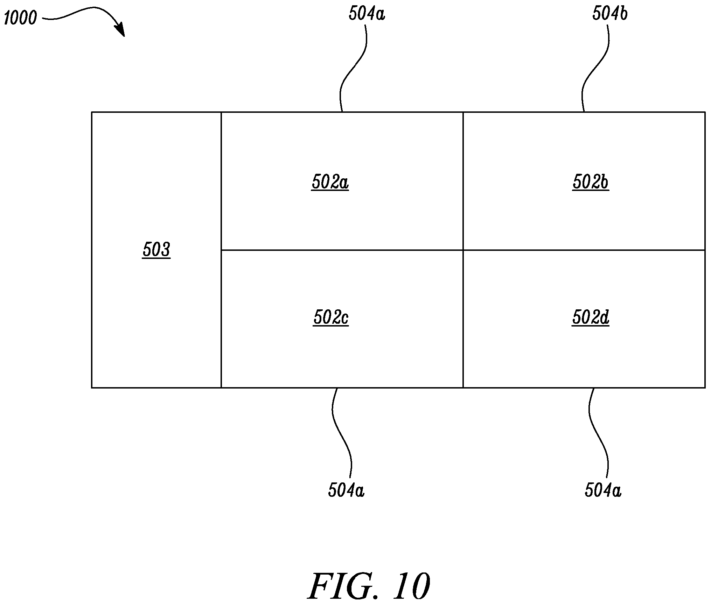

Figure 5 is a schematic diagram illustrating an example battery pack module 500, which may be used as part of a battery pack 130, 230 for an aircraft propulsion system of the types described above. Multiple such modules may be combined to make up a battery pack 1000 for a propulsion system, as for example illustrated in Figure 10.

The battery pack module 500 comprises an enclosure 504 that surrounds and encloses a plurality of battery cells 501₁₋ₙ arranged in a battery cell array 502. The individual cells 501₁₋ₙ are electrically connected to, and monitored by, a battery management system 503. The battery management system 503 may be separate from the battery enclosure 504, for example in the form of a standalone unit or a unit that can be attached and removed from the battery enclosure 504 to support maintenance and service of the battery pack module 500. The battery management system 503 monitors the charge state of the battery cell array 502 and controls electrical power flows to and from the array 502. The battery management system 503 also performs other functions relating to monitoring the array 502 for safety and performance of the battery pack module 500.

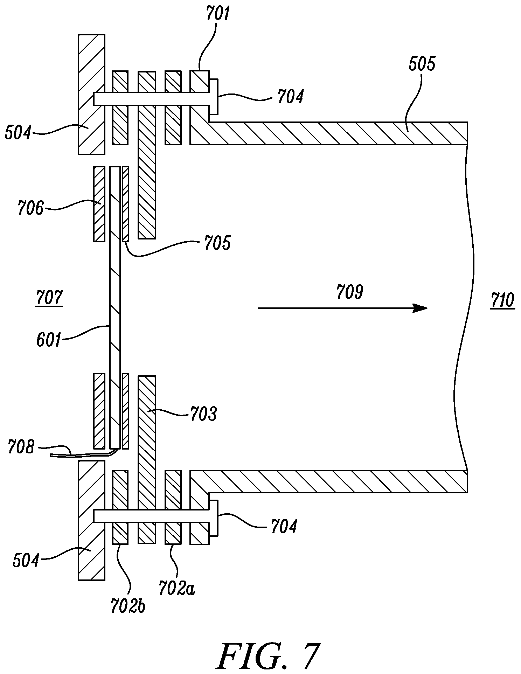

A vent 505 is connected to the enclosure 504 and is arranged to provide a fluid flow path between an interior of the enclosure 504 and an external environment. Further details of example vents are provided below in relation to Figures 7, 8 and 9. A disc is arranged to provide a fluid seal between the interior of the enclosure 504 and the vent 505, the disc being configured to rupture upon a pressure differential between the interior of the enclosure 504 and the external environment exceeding a predetermined threshold. An example disc is described below in relation to Figure 7. The enclosure may comprise multiple vents in some examples.

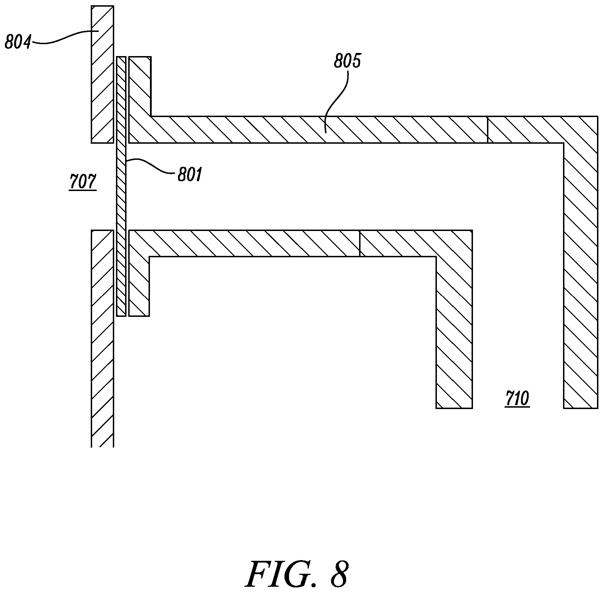

A sensing circuit is connected between the disc and the battery management system 503, the sensing circuit being configured to provide a signal to the battery management system upon rupture of the disc. An example sensing circuit is described below in relation to Figure 8.

The enclosure 504 may further comprise a bleed valve 506 that is configured to allow for equalisation of pressure between the interior of the enclosure 504 and the external environment. The bleed valve 506 allows for the internal and external pressure to equalise over time by allowing for limited fluid flow, for example via a narrow orifice or porous element. The bleed valve 506 thereby functions to prevent a pressure differential building up due to changes in external atmospheric pressure or temperature variations within the enclosure 504. Such changes may occur over time periods extending between minutes to hours, while changes in pressure that can cause the disc to rupture may occur over shorter periods of time, for example from seconds to minutes.

The vent 505 shown in Figure 5 comprises a pipe, or duct, having a first end 505a connected to the enclosure 504 and a second end 505b open to the external environment. The vent 505 may be arranged so that the interior of the enclosure 504 has, upon rupture of the disc, a fluid path to an exterior of a vehicle, typically an aircraft, in which the battery pack module 500 is installed, thereby directly gases resulting from failure of one or more of the battery cells in the array 502 to the external environment. The fluid path may include a manifold connecting multiple battery pack enclosures to a common exhaust port. The manifold may comprise arrangements such as one-way valves to prevent back flow of exhaust gases affecting other battery pack enclosures.

Currently available thermal runaway protection devices for HV battery packs may comprise pressure rupture discs or pressure release valves. A battery pack enclosure may use singular or multiple such devices depending on the battery vent management concept deployed. Once such pressure relief devices are activated, the internals of the battery pack enclosure are exposed to the local environment. The devices are typically non-reversible (i.e. one time use) devices.

Due to the dimensions of a typical battery pack, which may be in the form of a rectangular prism or cuboid, a small amount of internal pressure can create a significantly high mechanical force onto the surfaces of the battery pack enclosure. It is therefore preferred to keep any pressure differential between the interior of the battery pack enclosure and the external environment as low as possible. This reduces the weight of the enclosure because less material is required to achieve the required mechanical properties. A lower overall weight increases the energy density (e.g. in Wh/kg) of the battery pack, and is therefore desirable as a product solution, particularly in aerospace applications.

An aviation battery pack must survive frequent changes in altitude as the aircraft moves between ground and flight cruise altitude. This causes a differential pressure between the inside and outside of a battery pack. This is a highly cyclic behaviour compared to other battery markets, such an automotive, where changes are significantly more gradual/slow. Therefore, any vent management device used must be sized to satisfy requirements of the mission and with a pressure rating that does not result in rupture under normal conditions.

A thermal runaway (TR) event is of a hazardous nature, due to the possibility of associated fire, explosion and/or gas evolution. Therefore, the earlier such an event is detected, the earlier safety measures can be taken and any effect minimised. Overall, there is a need to develop accurate and fast early detection tools and protective vent management solutions. If a trigger point is reached, for example due to overheating of a single cell, a reaction may begin between the anode and electrolyte of the cell that releases heat and gas. This may cause the separator to cease working and then cause reactions to take place between the cathode and the electrolyte, releasing further heat and gas. Further reactions may then occur involving other materials such as the binder in the cell, releasing further heat and gas. Ultimately other components of the battery cell array may react and/or melt, causing complete breakdown of the array and fire or explosion of the battery pack module.

Managing TR or reducing its hazardous impacts can be achieved in various ways. Firstly, the TR can be prevented from happening in the first place, for example by keeping the temperature of cells in a battery pack below a critical limit through cooling and operational control, inert cell chemistry or other features including minimising manufacturing defects. Secondly, the risk of TR can be reduced by isolating the source posing the risk or limiting the TR to occur in a localised region. Thirdly, if TR has already started, attempts may be made to extinguish the thermal event and prevent further cascading, for example by emergency rapid cooling and active anti propagation measures. Fourthly, if TR has already started and cannot be extinguished, delaying its propagation may allow for actions to be taken such as safe evacuation of passengers. This may be achieved for example through use of fire-retardant materials. Fifthly, the onset of TR may be diverted to reduce the risk of hazardous propagation, for example through vent flow management or thermal dissipation conductive pathways.

Important factors to consider when designing for avoiding or mitigating TR include: the battery size and type; the design and application implementation; the application type; and the environment (e.g. temperature, humidity, human interaction, external conditions). The battery design can significantly affect propagation of a TR event. There are technologies available that may for example provide thermal barriers, physical separation or cooling. These are a compromise to added weight, volume and cost of the battery, where the impact varies depending on the application, for example use in an electric vehicle (EV) compared with stationary storage. Propagation is determined by the balance between heat generation and heat removal. The battery therefore needs to be designed to address this balance. Anti Propagation design solutions will impact the volume and weight of a battery solution.

There are potential hazards of lithium-ion batteries in particular, which are widely used due to their relatively high storage capacity per unit weight. These include: chemical hazard (due to release of chemicals such as HF,POF₃, etc.), which is dependent on cell chemistry; and electrical hazard (i.e. a high hazardous voltage). Cumulative electrical and chemical hazards can lead to thermal runaway, including heat, flame/fire, and electrochemical hazards (gas properties, smoke, arcing). Mechanical hazards may also result due to the effect of projectiles from explosion.

Major possible consequences in case of thermal runaway include: 1. Flammable/toxic gas emission (rupture and bursting, mechanical hazards); 2. Flame ignition, and possible flame propagation from cells or batteries casing and outside such as other parts of the vehicle or battery application architecture; 3. Heat emission and Thermal Runaway Propagation from cell to cell or battery to battery, even in the absence of flames; 4. Electrical failure, resulting from loss of power from one or more battery packs; and 5. Explosion, in which an explosion pressure wave (for example from an explosive stochiometric mix inside a battery) may travel through the vent management exhaust, without which the battery enclosure could fracture and send out projectiles, potentially causing more damage to other parts of the system or surrounding.

TR events result in various cell products being released, such as: thermal energy, where the temperature of a cell reaches critical level for decomposition of internal components; gases, due to battery electrolyte evaporation; gases due to generation of volatile and hazardous products as pressure builds within a cell; fire resulting from gas phase reactions escalating to gas ignition; solids ejection, resulting from a full TR ejection (including solids) over time.

It is consequently important to consider controlled venting or vent management of a battery pack module. This may result in: a reduced propensity for propagation; management of pressure within the cell during TR to reduce temperatures for as long as possible; evacuation of hot gases to avoid increasing the temperature of neighbouring cells; directing flare and ejecta to a safe location to avoid damage to surrounding components and dissipate heat. Gases building up inside an enclosure can eventually result in an explosion, while releasing gases in a controlled manner can decrease the risk of explosion and can avoid the potential for human exposure to toxic gases and excessive heat.

The possibility of failure of a single cell failure in a battery pack containing many similar cells, while having a low probability, cannot be completely eliminated, at least not at a realistic cost. Safety requirements for battery packs may therefore focus on measurement and attempting to reduce the severity and impact of any failure. A battery system should therefore be designed to prevent a single cell failure from propagating to the extent that there is fire external to the battery pack module or to an explosion.

Battery packs can in some cases be designed to prevent the propagation of thermal runaway of one cell to consume an entire battery pack. Various protection strategies at different system levels may be implemented for HV battery packs, which are summarised in Table 1 below. Similar protection strategies may be adopted at different system levels depending on the application. Understanding the system requirements relies on establishing the boundary conditions and what strategies and technologies have been adopted at adjacent system levels (i.e. those both above and below). Vent routing and extraction, the subject of the present disclosure, applies to various of these system levels, including battery pack and module design, application and environment.

**Table 1 - Different levels of protection for a battery pack module**

| **Level** | **System** | **Protection Strategies** | | | | |
|---|---|---|---|---|---|---|
| 1 | Cell chemistry | Ceramic Separator, shut-down separator, internal isolation Active material type and composition/formulation. Ratio of materials (composite electrode) Electrolyte additives and solvent type | | | | |
| 2 | Assembled Cell | Cell vent, Rupture disc over-pressure rating, CID (current interrupt device), wall thickness, gasket or seal rating, PTC (positive temperature coefficient) device | | | | |
| 3 | Battery Module | Sensing technologies and alarms | Cooling strategy, Flame retardant materials, Heat shielding, Ingress protection (IP rating) | Vent fluid pathway/ exhaust extraction | Shock absorption, Structural design, vented containment. | Fusing |
| 4 | Battery Pack | | | | | Power management, health monitoring, pressure limiting |
| 5 | Application | Chassis design, Architecture/ pack location | | | | Active ambient/ environment control |
| 6 | Environment/ Infrastructure | Limitation of system operating window, User Safety manual, Material safety data sheet | | | Physical barriers and structures | |
| 7 | Fire Fighter/Emergency Services | Extinguishing devices, Alarms, remote health monitoring, suppression systems | | | | |

As well as sensing rupture of the disc, the battery pack module 500 may be configured to receive a temperature signal from a temperature sensor 507 that is configured to sense a temperature of the interior of the enclosure 504. The temperature signal may be used by the battery management system 503 in combination with a signal from the disc to provide one or two possible alerts. A first alert may be provided upon detection of rupture of the disc, with or without the use of the temperature sensor 507. This may, however, not be sufficient to determine that a thermal runaway event has started because in some cases the disc may burst due to other factors during normal use. The first alert may therefore be merely a warning that a disc needs replacing. A second alert may be provided upon detection of rupture of the disc and upon detection of a temperature of the interior of the enclosure 504 being above a defined temperature threshold. This combination can be used to more definitively determine that a thermal runaway event has started. The battery management system 503 may then disconnect the array 502 in an attempt to mitigate the effects and impact of the thermal runaway, for example to prevent any electrical power being drawn from the array. Venting the enclosure 504 may then allow the thermal runaway event to be contained or stopped, allowing other battery arrays to continue operation.

### Figure 6

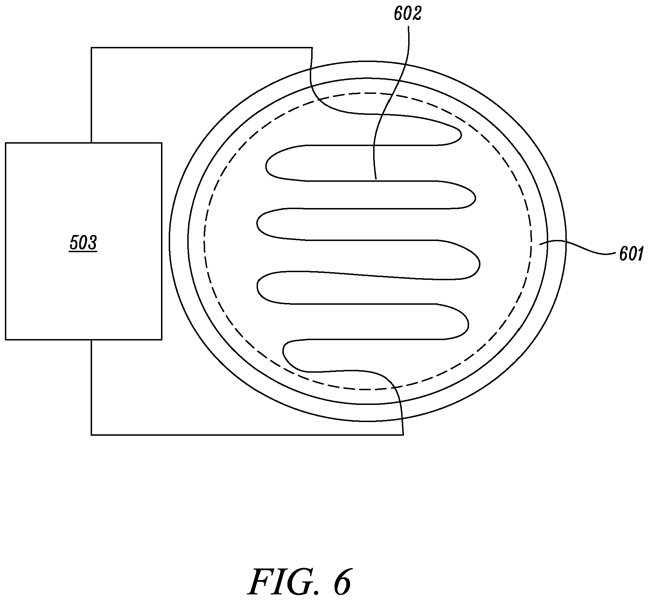

Figure 6 illustrates schematically an example burst disc 601 for use with the battery pack module 500 described above in relation to Figure 5. The disc 601 is arranged in the module 500 to provide a fluid seal between the interior of the enclosure 504 and the vent 505 during normal use and to rupture upon a pressure differential between the interior of the enclosure 504 and the external environment exceeding a predetermined threshold. A pressure differential in either direction may cause the disc 601 to rupture but normally it would be expected to rupture when the interior pressure of the enclosure is higher than the exterior pressure. The disc 601 may therefore be configured accordingly, usually with a concave side of the disc facing towards the potentially higher pressure volume, in this case the interior of the enclosure. A sensing circuit 602 is connected between the disc 601 and the battery management system 503, which is configured to provide a signal to the battery management system 503 upon rupture of the disc 601. In the illustrated example, the sensing circuit 602 comprises a conductor extending across a surface of the disc 601 that is arranged to break an electrical connection to the battery management system on rupture of the disc 601. The conductor may for example be in the form of a conductive trace having a serpentine path extending across a face of the disc 601 so that the path will inevitably be broken regardless of how the disc bursts.

The disc is generally not flow directional but there may be some benefit in having the conductive trace facing towards the interior of the enclosure, for example to avoid the conductive trace being exposed to external elements that may over time degrade its integrity.

### Figure 7

As illustrated in Figure 7, the disc 601 may be arranged within a mechanical assembly that allows the disc 601 to be changed from outside of the battery pack module. The disc 601 is secured to the battery pack module enclosure 504 at a first end of the vent 505, which is in the form of a pipe or duct. The first end of the vent 505 comprises a flange 701, which is secured to the enclosure 504 via gaskets 702a, 702b and an annular flange adaptor 703 using fasteners 704. The disc 601 is attached to the flange adaptor 703 via a further gasket 705, the outer edge of the disc 601 being held between a backing plate 706 and the annular flange adaptor 703. Once assembled, the rupture disc 601 provides a seal between the interior 707 of the enclosure 504 and the vent 505. The sensing circuit connecting the disc 601 to the battery management system 503 may comprise a cable 708 providing a connection between the disc 601 and the battery management system 503.

Upon rupture of the disc 601 in the event of a pressure differential between the interior 707 of the enclosure 504 and the external environment 710 exceeding a predetermined threshold, gases from within the enclosure 504 travel through the vent 505 in a flow direction 709 toward the external environment 710.

If the disc 601 is ruptured, only the disc 601 and optionally also the associated seals or gaskets need to be replaced. The cable 708 may comprise an inline connection for ease of replacement of the disc without the need to disassemble the battery pack module. In a general aspect therefore, the disc 601 is secured to a first end of the vent that is secured to the enclosure 504. Replacement of the disc 601 can be more easily effected by disconnecting the vent 505 from the enclosure.

The vent 505 may be arranged and oriented such that collection of water and debris from the external environment 710 is prevented during normal use. An outlet of the vent 505 may therefore be oriented downwards relative to an upright orientation of a vehicle to which the battery pack module is mounted to prevent collection of water and debris in the vent.

A typical operating overpressure for the disc 601, i.e. a pressure differential the disc is designed to withstand without bursting, is between around 0.1 and 1 bar, while an overpressure of up to around 0.3 to 0.5 bar may provide an advantage for battery enclosures having a capacity of between around 20 kWh and 100 kWh used in advanced electric and hybrid aircraft applications.

### Figure 8

Figure 8 illustrates an example of a conventional rupture disc 801 providing a seal between an interior 707 of a battery pack module enclosure 804 and an external environment 710. The disc 801 is typically mounted in a position which is not easily accessible without disassembly or using another inspection technique such as a bore scope camera to inspect the disc 801 through the vent 805. If the vent 805 does not have a straight path, however, inspection can be more difficult.

The low pressure rupture threshold that is necessary to detect excess pressure due to potential thermal runaway can result in false operation, i.e. opening of the disc when there is no thermal runaway or cell venting situation. Examples of situations that may cause disc opening include: adverse weather conditions (including mechanical force from water jets, snow, ice); transportation; aging (e.g. creep due to repeated stress); corrosion (e.g. exposure to chemicals); electrical over potential (e.g. fault currents passing through the disc); incorrect Installation of ducting; service inspections (handling, penetration, or strain); wildlife (animals, insects); and manufacturing defects.

A monitoring system, enabled by the sensing circuit as described above, can allow for the disc status to be determined without requiring removal and inspection (or complex borescope procedures), which will tend to drive aircraft downtime, or exposing the interior of the battery pack module to external conditions where the disc is open unknowingly. Ingress of external material into a battery pack can itself lead to failure of a HV Battery Pack, including thermal runaway. Additionally, rupture discs can also failure during manufacturing end of line tests, such as vacuum pressure decay leak tests, if not performed correctly. These induced failures can be difficult to inspect. Monitoring of the status of the disc provides additional quality assurance to the product.

The rupture disc may be of various types. The disc itself may be composed of a single material or a composite laminate. A composite construction provides advantages regarding the ability to have a smaller diameter disc (with an acceptable flow pressure drop when open) but with a low-pressure operating point. However, such discs tend to be more susceptible to environmental high temperature due to the use of a polymer membrane layer that weakens at higher temperatures and may be less durable to high vibration loading. Solid metal discs can have a wider operating pressure window and can have a higher temperature operating point than composites. Other discs, such as polymer single material types may have a smaller diameter, but multiple such discs may be needed to provide an adequate flow, which increases the risk of leak paths and ingress points. An example disc is disclosed in US8557416B2, in which a plurality of plastic values are configured to unseal a battery enclosure to allow hot gases to be exhausted from a battery pack. The concept described in US8557416B2 may be acceptable for automotive battery applications, but may not be suitable for battery cell packs in aviation applications where a more controlled release may be demanded.

Different circuit path designs can be used for the sensing circuit. These may have features to help in avoiding false alarm signals to the battery management system or may include system redundancy such as separate channels.

The burst disc may have a flat shape or may have a profiled shape such as a domed curvature. Domed discs will have different performance characteristics in vacuum and over pressure.

The rupture disc may typically be circular in shape, but this is not a requirement. Other shapes are possible, such as oval, rectangular and square, which may be used in the process industry.

Example rupture discs include the Zook bursting disc indicator, available from Flexachem or various types of signalling devices available from Rembe GmbH.

### Figure 9

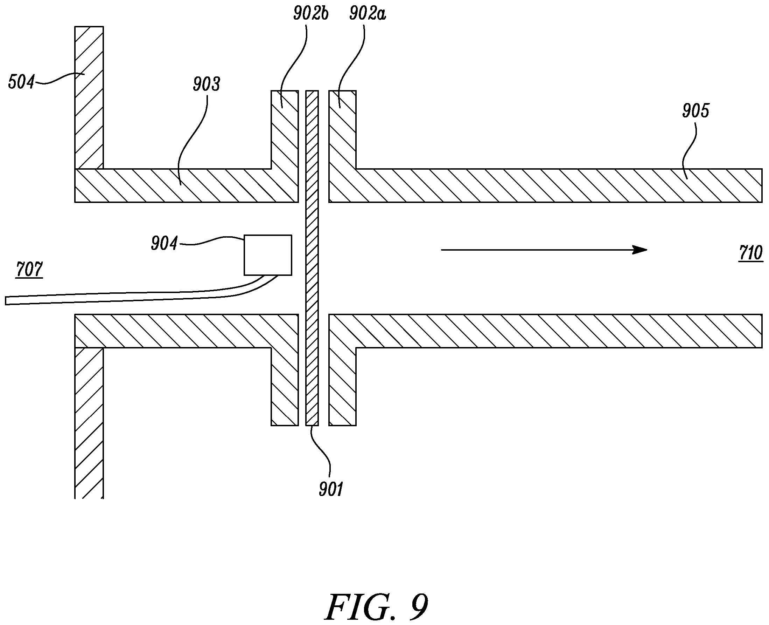

Other ducting system arrangements compared to that described above in relation to Figure 7 are possible, and which may be integrated into a vent management system, manifold or exhaust. One example variation involving a flanged arrangement in the vent is illustrated in Figure 9. The vent 905 comprises a first flange 902a at a first end. The disc 901 is held between the first flange 902a and a corresponding second flange 902b extending from an outlet 903 of the enclosure 504, the flanges 902a, 902b being fastened together with suitable fasteners such as bolts (not shown). The disc 901 may be of any type described herein or in some examples may be of a conventional type and a separate sensor 904 may be provided to detect rupture of the disc 901. The sensor may for example be a proximity switch that changes state (e.g. from closed to open) when the adjacent disc 901 opens. Other types of sensor may also be used, for example sensors based on light sensing using fibre optics or light reflection from a surface of the disc 901.

### Figure 10

Figure 10 illustrates schematically an example battery pack 1000 that comprises multiple enclosures 504a-d connected to a common battery management system 503. Each of the enclosures 504a-d may comprise a battery cell array 502a-d, vent, rupture disc and sensing circuit connected to the battery management system 503 as described herein, allowing each enclosure 504a-d to vent gases to an external environment in the event of a thermal runaway event. Doing so may prevent thermal runaway from extending to other modules in the battery pack 1000.

## Claims

1. A battery pack module (500) comprising:
a plurality of battery cells (501₁₋ₙ) arranged in a battery cell array (502);
a battery management system (503) electrically connected to the battery cell array (502);
an enclosure (504) surrounding the battery cell array (502);
a vent (505) connected to the enclosure (504) and arranged to provide a fluid flow path between an interior (707) of the enclosure (504) and an external environment (710);
a disc (601) arranged to provide a fluid seal between the interior (707) of the enclosure (504) and the vent (505), the disc (601) configured to rupture upon a pressure differential between the interior (707) of the enclosure (504) and the external environment (710) exceeding a predetermined threshold; and
a sensing circuit (602) connected between the disc (601) and the battery management system (503) and configured to provide a signal to the battery management system (503) upon rupture of the disc (601).

2. The battery pack module (500) of claim 1, wherein the enclosure (504) comprises a bleed valve (506) configured to allow for equalisation of pressure between the interior (707) of the enclosure (504) and the external environment (710).

3. The battery pack module (500) of claim 1 or claim 2, wherein the vent (505) comprises a pipe having a first end connected to the enclosure (504) and a second end open to the external environment (710).

4. The battery pack module (500) of claim 3, wherein the disc is secured against the first end of the pipe.

5. The battery pack module (500) of any preceding claim, wherein the sensing circuit (602) comprises a conductor extending across a face of the disc (601) and arranged to break an electrical connection to the battery management system (503) on rupture of the disc (601).

6. The battery pack module (500) of any one of claims 1 to 5, wherein the sensing circuit comprises a sensor (904) configured to detect rupture of the disc (901).

7. The battery pack module (500) of any preceding claim, wherein the predetermined threshold is between around 0.1 and 1.0 bar.

8. The battery pack module (500) of claim 7, wherein the predetermined threshold is between around 0.3 and 0.5 bar.

9. The battery pack module (500) of any preceding claim, wherein the battery cell array (502) is configured to store between around 20 kWh and 100 kWh.

10. The battery pack module (500) of any preceding claim, wherein the disc (601) is metallic.

11. The battery pack module (500) of any preceding claim, wherein the battery management system (503) is configured to output a first alert upon detection of rupture of the disc.

12. The battery pack module (500) of claim 11, further comprising a temperature sensor (507) configured to sense a temperature of the interior of the enclosure.

13. The battery pack module (500) of claim 12, wherein the battery management system (503) is configured to receive a temperature signal from the temperature sensor (507) and provide a second alert upon detection of rupture of the disc (601) in combination with detection of a temperature of the interior of the enclosure (504) above a temperature threshold.

14. The battery pack module (500) of claim 13, wherein the battery management system (503) is configured to disconnect the battery cell array (502) upon detection of rupture of the disc in combination with detection of detection of a temperature of the interior of the enclosure (504) exceeding a temperature threshold.

15. A vehicle propulsion system (100, 200) comprising a battery pack module (130, 500) according to any preceding claim.
